# EUROPEAN PATENT SPECIFICATION

(11) **EP 0 553 929 B1**
(45) Date of publication and mention of the grant of the patent: **23.10.1996**
(21) Application number: 93200222.3
(22) Date of filing: 27.01.1993
(51) Int. Cl.: B62D 53/00, B60P 3/40, B60D 1/155

(54) **Vehicle system and container therefor**
Fahrzeugsystem und Container dafür
Système de véhicule et conteneur pour cela

(30) Priority: 30.01.1992 BE 9200096
(43) Date of publication of application: 04.08.1993
(73) Proprietor: ESTEPE SPECIAL TRUCK PRODUCTS B.V., NL-5384 VT Heesch (NL)
(72) Inventor: van Heertum, Martinus Gijsbertus Franciscus Maria, NL-5481 HA Schijndel (NL)
(74) Representative: Hoijtink, Reinoud

(56) References cited:
- EP-A- 0 094 701
- EP-A- 0 126 940
- AU-A- 4 669 568
- DE-A- 3 532 771
- GB-A- 623 132

## Description

The invention relates to a vehicle system for transporting containers according to the characteristics of the preamble of claim 1.

Such a vehicle system is disclosed in DE-A-3532771. The rear end of the long container is connected to the trailer by means of a pair of U-profiled rails cooperating with rollers or sliding elements. These rails with rollers or sliding elements constitute such connection of the rear end of the motor vehicle with the rear part of the long container that length variations between a straight long container on the one hand and a bended train of motor vehicle and trailer on the other hand due to travel of the vehicle system through bends are compensated. The long container together with its trailer constitutes a unit which can be disconnected from the motor vehicle. During loading and unloading of the container the motor vehicle can be used for conveying other trailers.

The invention has the object to provide a vehicle system which is allowed on the road network and which can still transport a long container, preferably of around 16 m.

The invention further has the object that the long container can be coupled and uncoupled not only from the motor vehicle but also from the trailer, in order that the vehicle system of the motor vehicle together with the trailer can be used for conveying another long container and/or simultaneously two small containers.

To this end the invention provides a vehicle system as designated in claim 1.

It is noted that AU-A-46695/68 discloses a vehicle system for transporting lengthy articles like trees, said system comprising a motor vehicle and a trailer coupled to the motor vehicle by means of a drawbar wherein said motor vehicle and said trailer are provided with rotatable U-shaped supports for the lengthy articles, which lengthy articles must have a width which is substantially smaller than the width of the vehicle and the trailer. This vehicle system can only be loaded by means of a lifting system. It is not provided with two couplings which can be engaged and disengaged by moving the vehicle system relative to a container.

The invention further provides a container as claimed in claim 9.

Mentionned and other features of the invention will become apparent from the description hereinbelow with reference to drawings in which, in schematic form:
figures 1 and 3 show side views of two preferred embodiments of the vehicle system according to the invention;
figure 2 shows a side view of another vehicle system assembled with elements of the vehicle system according to the invention;
figure 4 shows on a larger scale a section along the line IV-IV in figure 1;
figure 5 shows on a larger scale a perspective exploded view of detail V of figure 1;
figure 6 shows on a larger scale a perspective view of detail VI of figure 2;
figure 7 shows on a larger scale a perspective view of detail VII of figure 3 in uncoupled situation;
figure 8 is a schematic top view of the vehicle system according to the invention in two different positions;
figure 9 is a perspective view of a preferred embodiment of a trailer of the vehicle system according to the invention;
figure 10 shows on a larger scale detail X of figure 9;
figure 11 shows on a larger scale a section along the line XI-XI in figure 10; and
figure 12 shows a section along line XII-XII in figure 11.

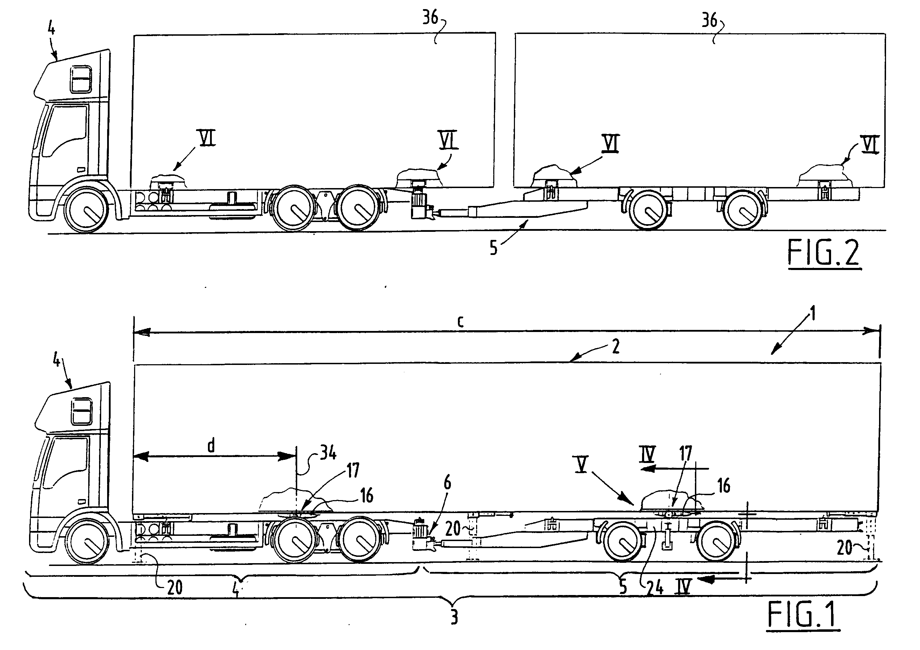

The vehicle system 1 of figure 1 comprises at least one motor vehicle-trailer combination 3 consisting of a motor vehicle 4 and a trailer 5 and at least one long container 2 which is carried by a motor vehicle-trailer combination 3. Vehicle system 1 preferably contains a plurality of motor vehicle-trailer combinations 3 and an even larger number of long containers 2 which can each be taken to loading and/or unloading sites and handled there, while the motor vehicle-trailer combination 3 can meanwhile transport other containers 2. Containers 2 have a great length c and preferably have an approximate length of 16 m, which is such that 8 pallets of 2 metres or 16 pallets of 1 metre or 5 aircraft pallets of 3.20 metres can just be received therein one behind another.

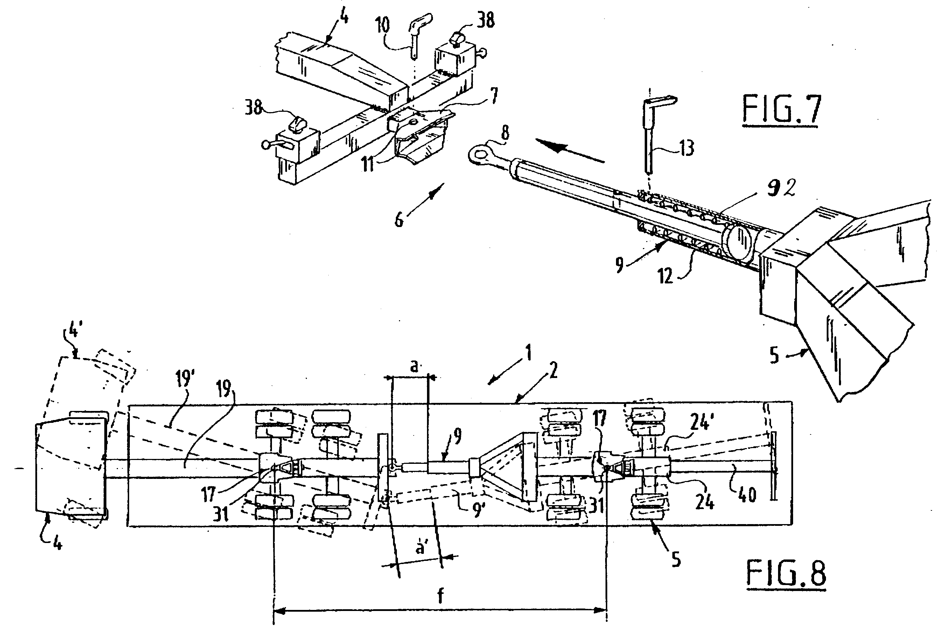

The trailer 5 is coupled to the motor vehicle 4 by means of a conventional catch coupling 6 (figure 7) whereof a catch plate 7 is fixed to the rear end of motor vehicle 4 and whereof a pulling eye 8 is connected to the leading end of a telescopic drawbar 9 of trailer 5. When the pulling eye 8 is captured by the catch plate the coupling is effected by placing a pin 10 through holes 11 of the catch plate 7 and through pulling eye 8. Finally, the pin 10 is further locked in conventional manner (not shown).

The telescopic drawbar 9 comprises a front part with a pulling eye 8 which front part is urged relative to a fixed part 92 by means of a spring 12 into its normal retracted position, in which it can be secured with a locking pin 13 in the case the motor vehicle-trailer combination 3 is moved without long container 2.

Figure 8 shows that during travel through a bend the extended length a' of drawbar 9' is greater than the extended length a of drawbar 9 during travel straight shead, as the pitch distance f between both king-pin couplings 17 is constant. The pulling eye 8 thus constitutes a first compensating means and the fixed part 92 of the drawbar 9 constitutes a second compensating means which first and second compensating means are moveable relative to each other for compensating travel of the vehicle system 1 through a bend.

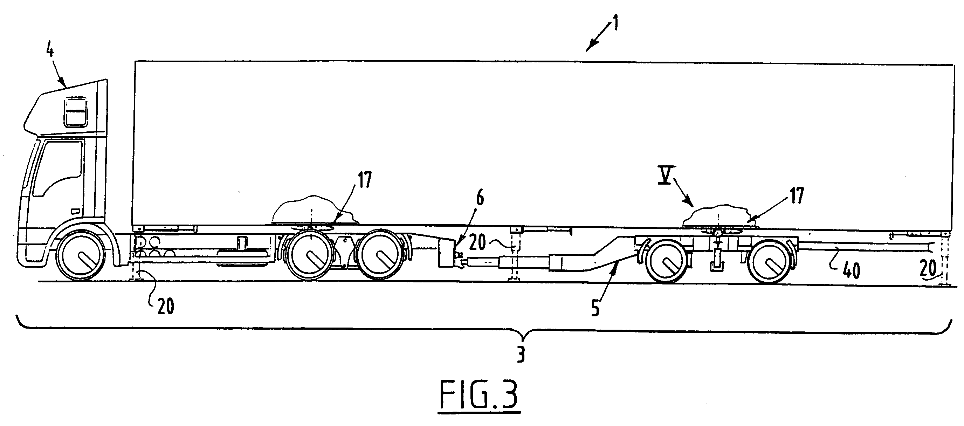

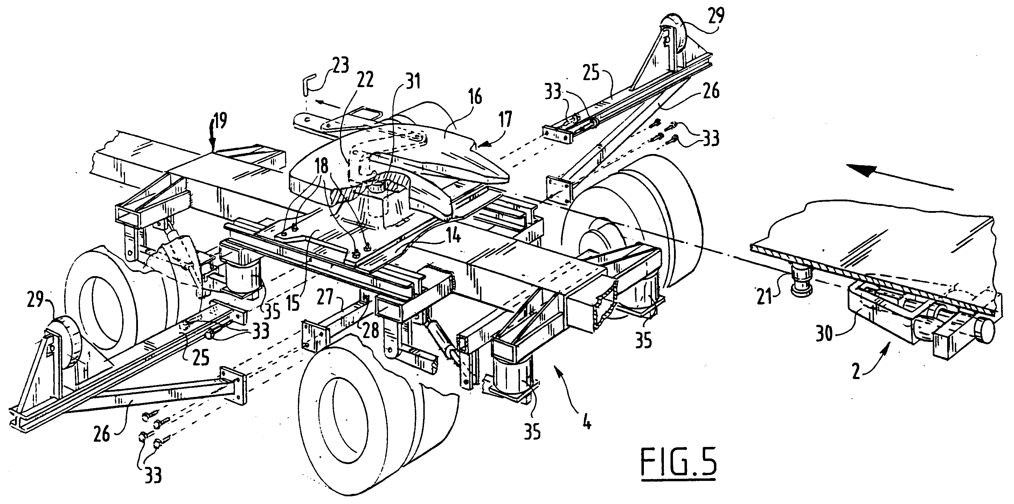

The motor vehicle-trailer combination 3 of figure 3 has a telescopic rear end 40 for carrying a bumper beam with rear lights, brake lights and number plate which can be retracted in order to shorten the trailer 5 in the case the motor vehicle-trailer combination 3 is travelling without long container 2.

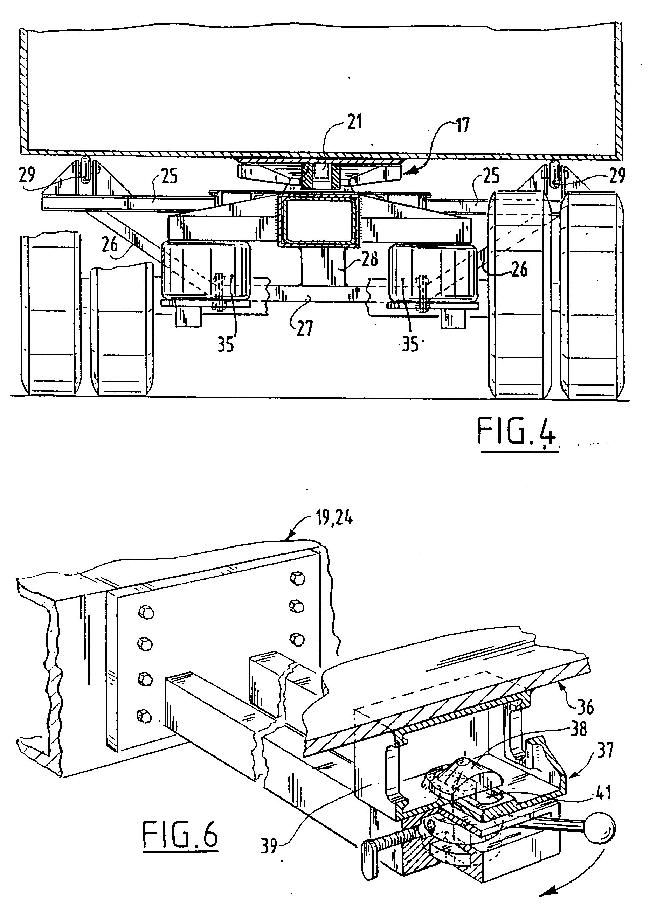

The motor vehicle 4 has a plate 14 forming part of its frame 19, to which plate the lower plate 15 of a dish 16 of a conventional king-pin coupling 17 can be releasably attached by means of bolts 18. In the same manner the frame 24 of trailer 5 likewise bears a dish 16 of a king-pin coupling 17. The container 2, which stands on extending legs 20, is coupled to the motor vehicle-trailer combination 3 in that this motor vehicle-trailer combination 3 reverses thereunder with its air springs 35 in the lowest position. When the two dishes 16 approach their associated king-pins 21 of container 2, the air springs 35 of the motor vehicle-trailer combination 3 are pumped up so that the king-pins 21 and the wedges 30 belonging thereto are engaged by the dishes 16 (figure 5). The king-pin couplings 17 are then secured by means of locks 22 which are in turn secured with pins 23. Each dish 16 is mounted rotatably on a vertical pin 31 relative to the associated plate 15. On either side of king-pin couplings 17 the frames 19 and 24 are provided with cross beams 25 which are fastened releasably to the frames 19, 24 by means of bolts 33 and which are supported by shores 26 and horizontal spacing members 27 arranged therebetween, this such that rugged support constructions are present which are fixed to the frames 19, 24 with a strut 28 (figure 4). Mounted on the removable cross beams 25 are rollers 29 which support the container 2 on either side of the king-pins 21.

The distance d between the axis of rotation 34 of the leading king-pin coupling 17 and the front part of container 2 amounts for instance to a maximum of 3.50 metres.

The motor vehicle-trailer combination 3 of figure 1 can optionally transport two short containers 36 instead of one long container 2. For this purpose the dishes 16 and cross beams 25 with shores 26 and rollers 29 are then removed and the containers 36 fastened on the motor vehicle 4 and the trailer 5 by means of conventional locking means 37, whereof a rotatable lock 38 fixed in each case to a frame 19, 24 engages via a slot 41 into a lock housing 39 attached to the bottom of the container 36. In this case the telescopic drawbar 9 is secured using the lock 13.

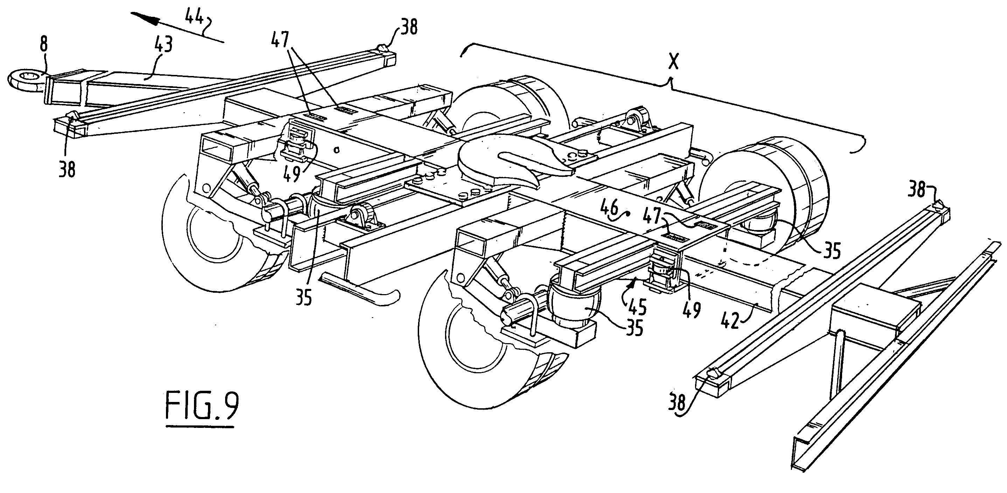

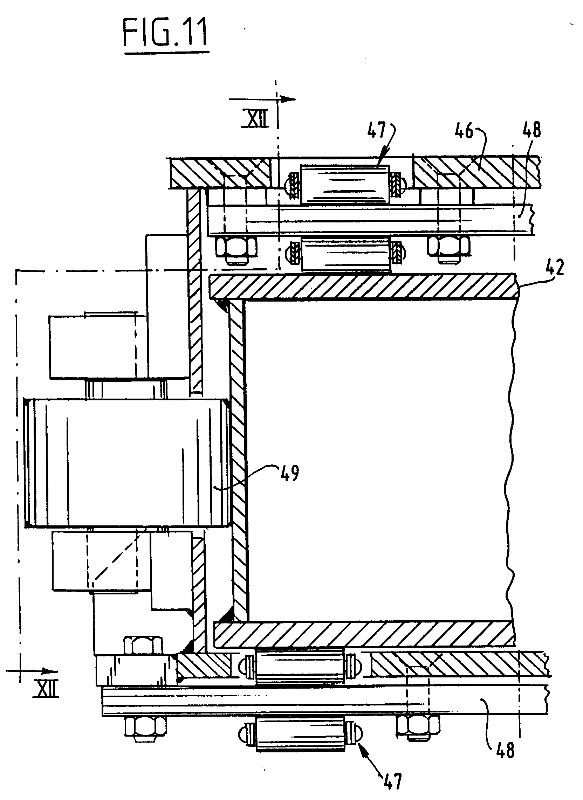

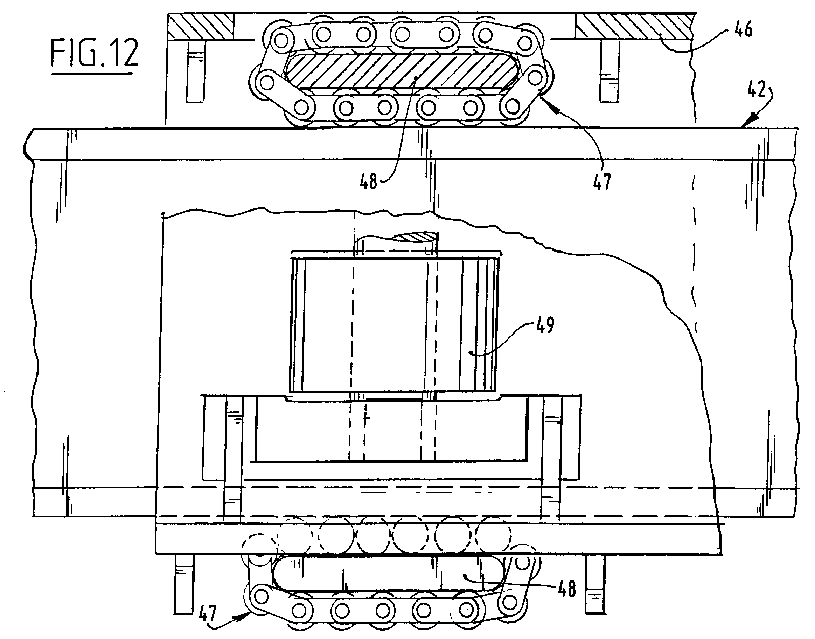

The trailer 5 of figures 9-12 comprises a longitudinal frame beam 42 having a drawbar 43 with pulling eye 8 fixedly attached thereto on which beam an axle set frame 45 is slidable in travel direction 44, a longitudinal box girder 46 of which engages for telescopic sliding on the longitudinal frame beam 42 and is therein guided by means of two pairs of endless roller chains 47 which are each mounted round a plate 48 of longitudinal box girder 46 and which are arranged respectively on the top and bottom sides of longitudinal frame beam 42. The longitudinal frame beam 42 is further guided by two pairs of rollers 49 engaging on either side of longitudinal box girder 46 and supported by longitudinal box girder 46.

According to arrows 50 there is a mutual sliding of longitudinal frame beam 42 constituting first compensating means and longitudinal box girder 46 constituting second compensating means. This mutual sliding can be locked using a locking pin 51.

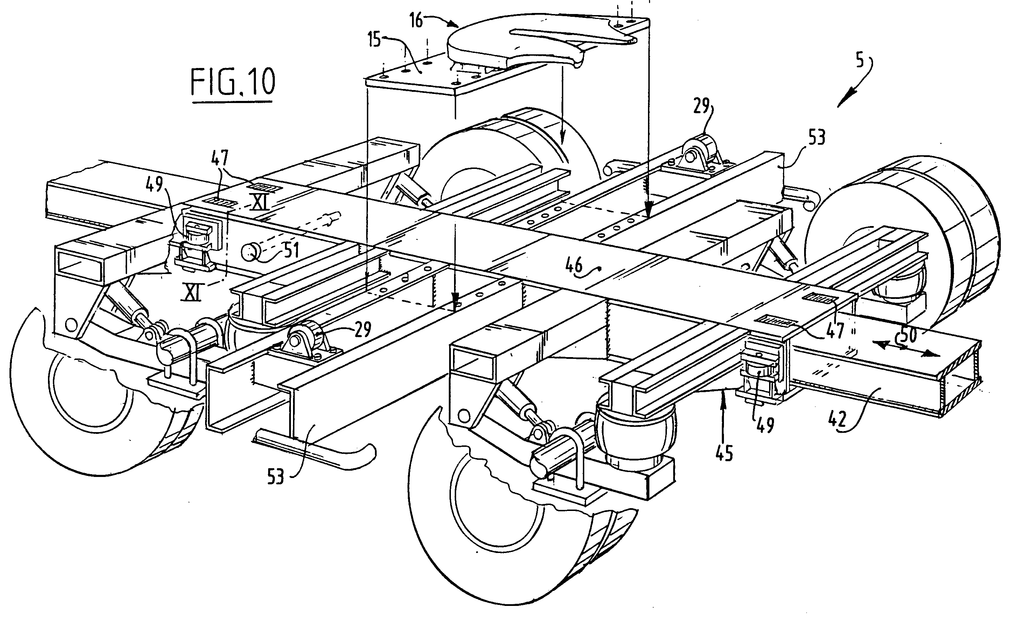

The coupling dish 16 can be screwed releasably into place with its lower plate 15 to the axle set frame 45 (figure 10). Similarly, the support rollers 29 are releasably fastened with bolts to cross beams 53 of the axle set frame 45 so that when the coupling dish 16 and the rollers 29 are removed the trailer 5 can be used for transporting a short container.

The long container 2 which stands on extending legs, is coupled to the motor vehicle-trailer combination 3 by this motor vehicle-trailer combination 3 being reversed thereunder with its air springs 35 in the lowest position. The operation of coupling the container 2 proceeds as follows:
- locking the axle set of trailer 5 with the coupling dish 16 and stabilization rollers 29 mounted thereon;
- allowing the air springs 35 of both vehicles 4, 5 to sink into the lowest position;
- driving the motor vehicle-trailer combination 3 backward under the container 2;
- as soon as the coupling dish 16 of trailer 5 approaches the second king-pin 21 Of the container 2 the air springs 35 of trailer 5 must be pumped up such that coupling dish 16 can slide against the bottom of the container 2 and the coupling between this coupling dish 16 and associated king-pin 21 can be effected;
- after said coupling has been effected the axle set frame 45 of trailer 5 must be released;
- driving the motor vehicle-trailer combination 3 further to the rear under the container 2;
- as soon as the coupling dish 16 of motor vehicle 4 approaches the first king-pin 21 of the container 2 the air springs 35 of motor vehicle 4 must be pumped up such that coupling dish 16 can slide against the bottom of the container 2 and the coupling between this coupling dish 16 and associated king-pin 21 can be effected;
- both coupling dishes 16 must then also be manually locked.

## Claims

1. Vehicle system (1) at least comprising a motor vehicle (4), a trailer (5) coupled to the motor vehicle (4) by means of a drawbar and a long container (2) which is carried by both the motor vehicle (4) and the trailer (5), a front part of said long container (2) being releasably and rotatably connected to the motor vehicle (4) by means of a first coupling (17), which can be engaged and disengaged by moving the motor vehicle (4) relative to the container (2) situated thereabove, when standing on its legs (20), a rear part of said long container (2) being supported by said trailer (5) and being connected thereto, said motor vehicle (4) being coupled with the rear part of said long container (2) through compensating means having first compensating means (92, 46) connected to said long container (2) and second compensating means (8, 42) coupled to said motor vehicle (4), said first compensating means (92, 46) and said second compensating means (8, 42) being moveable relative to each other for compensating travel of the vehicle system (1) through a bend, **characterized in that** said long container (2) is provided with legs at its front part and at its rear part, and that said container (2) is releasably and rotatably connected to the trailer (5) by means of a second coupling (17), which second coupling (17) can be engaged and disengaged by moving the trailer (5) relative to the container (2) situated thereabove, when standing on its legs (20).

2. Vehicle system (1) as claimed in claim 1, **characterized in that** on either side of its longitudinal axis the long container (2) supports on supports (29) of the motor vehicle (4) and/or of the trailer (5), which supports (29) each preferably comprise at least one roller.

3. Vehicle system (1) as claimed in claim 2, **characterized in that** the supports (29) are arranged on cross beams (25) which are supported with shores (26) relative to the longitudinal frame (19, 24) of the motor vehicle (4) respectively the trailer (5).

4. Vehicle system as claimed in any of the foregoing claims, **characterized in that** the long container (2) has a length greater than 15 metres and preferably equal to approximately 16 metres.

5. Vehicle system as claimed in any of the foregoing claims, **characterized in that** the container (2) is connected to the motor vehicle (4) as well as to the trailer (5) by means of a king-pin coupling (17).

6. Vehicle system as claimed in any of the foregoing claims, **characterized by** an axial relative displaceability of vehicle system elements, for instance elements (8 and 92) of a telescopic drawbar (9) for compensating during travel round a bend for the extending of the piece of the vehicle system present beneath the container between the hook-on elements (pins 21) of the container (2) which are held at a fixed distance.

7. Vehicle system as claimed in any of the foregoing claims, **characterized in that** the trailer (5) has an outward slidable rear piece (40) for carrying rear lights and brake lights.

8. Vehicle system as claimed in any of the foregoing claims, **characterized in that** an axial set frame (46) of the trailer (5) is slidable together with a coupling dish (16) in lengthwise direction relative to a longitudinal frame (42).

9. Container (2) for completing, together with a motor vehicle (4) and a trailer (5), a vehicle system (1) as claimed in any of the foregoing claims, **characterized in that** the container (2) has a length of approximately 16 metres and is provided with two coupling elements, for instance king-pins (21), for completing, together with the coupling elements, for instance coupling dishes (16), arranged on a motor vehicle (4) respectively on a trailer (5), two couplings (17), for instance king-pin couplings, which can each be engaged and disengaged by moving a motor vehicle (4) respectively a trailer (5) relative to the container (2) situated thereabove.

10. Vehicle system (1) for, after completion, constituting a vehicle system according to any of the claims 1-8, at least comprising a motor vehicle (4) and a trailer (5) coupled thereto by means of a drawbar, said motor vehicle (4) and said trailer (5) each having adapted for carrying a short container (36) to be releasably connected thereto, said vehicle system (1) being also adapted for carrying a long container (2), when a front part of said long container (2) is releasably and rotatably connected to said motor vehicle (4) by means of a first coupling (17) which car, be engaged and disengaged by moving said motor vehicle (4) relative to said container (2) situated thereabove when standing on its legs, in which case a rear part of said long container (2) is supported by said trailer (5) and is connected to a receiving part thereof;
said motor vehicle (4) being couplable with said receiving part through connection means having first connected means (46) connected to said receiving part and second connected means (42) coupled to said motor vehicle (4);
said first connected means (46) and said second connected means (42) being moveable relative to each other for compensating travel of the vehicle system (1) through a bend, **characterized in that** said receiving part is adapted for connecting a second coupling (17) for releasably and rotatably connecting a rear part of said long container (2) to said trailer (5), which second coupling (17) can be engaged and disengaged by moving said trailer (5) relative to said long container (2) situated thereabove when standing on its legs.

## Patentansprüche

1. Fahrzeugsystem (1) mit mindestens einem Motorfahrzeug (4), einem Anhänger (5), der mittels einer Zugstange an das Motorfahrzeug (4) gekoppelt ist, und einem Langcontainer (2), der sowohl vom Motorfahrzeug (4) als auch vom Anhänger (5) getragen ist, wobei ein Vorderteil des Langcontainers (2) lösbar und drehbar mit dem Motorfahrzeug (4) verbunden ist mittels einer ersten Kupplung, die durch Bewegen des Motorfahrzeugs (4) relativ zu dem darüber befindlichen Container (2), wenn dieser auf seinen Beinen (20) steht, ein- und ausgekuppelt werden kann, wobei ein hinterer Teil des Langcontainers (2) von dem Anhänger (5) getragen wird und mit diesem verbunden ist, und wobei das Motorfahrzeug (4) mit dem hinteren Teil des Langcontainers (2) gekoppelt ist über Kompensationsmittel mit ersten Kompensationsmitteln (92, 64), die mit dem Langbehälter (2) verbunden sind, und zweiten Kompensationsmitteln, die mit dem Motorfahrzeug (4) gekoppelt sind, wobei die ersten Kompensationsmittel (92, 46) und die zweiten Kompensationsmittel (8, 42) relativ zueinander bewegbar sind, um die Fahrt des Fahrzeugsystems (1) durch eine Kurve zu kompensieren,
dadurch **gekennzeichnet,** daß der Langcontainer (2) mit Beinen an seinem vorderen Teil und an seinem hinteren Teil versehen ist und daß der Behälter (2) mit dem Anhänger (5) lösbar und drehbar verbunden ist mittels einer zweiten Kupplung (17), wobei die zweite Kupplung (17) durch Bewegen des Anhängers (5) relativ zu dem darüber befindlichen Container (2), wenn dieser auf seinen Beinen (20) steht, ein- und ausgekuppelt werden kann.

2. Fahrzeugsystem nach Anspruch 1,
dadurch **gekennzeichnet,** daß der Langbehälter (2) auf beiden Seiten seiner Längsachse auf Stützen (29) des Motorfahrzeugs (4) und/oder des Anhängers (5) abgestützt ist, wobei die Stützen (29) vorzugsweise jeweils mindestens eine Rolle aufweisen.

3. Fahrzeugsystem (1) nach Anspruch 2,
dadurch **gekennzeichnet,** daß die Stützen (29) an Querbalken (25) angeordnet sind, die mit Streben (26) relativ zum Längsrahmen (19, 26) des Motorfahrzeugs (4) bzw. des Anhängers (5) abgestützt sind.

4. Fahrzeugsystem nach einem der vorangehenden Ansprüche,
dadurch **gekennzeichnet,** daß der Langcontainer (2) eine Länge von mehr als 15 m und vorzugsweise von annähernd 16 m aufweist.

5. Fahrzeugsystem nach einem der vorangehenden Ansprüche,
dadurch **gekennzeichnet,** daß der Behälter (2) sowohl mit dem Motorfahrzeug (4) als auch mit dem Anhänger (5) mittels einer Königszapfenkupplung (17) verbunden ist.

6. Fahrzeugsystem nach einem der vorangehenden Ansprüche,
**gekennzeichnet** durch eine relative Axialverschiebbarkeit von Elementen des Fahrzeugsystems, z.B. Elementen (8 und 92) einer teleskopischen Zugstange (9), um beim Kurvenfahren die Längung des Stücks des Fahrzeugsystems zu kompensieren, das unterhalb des Containers zwischen den Einhakelementen (Stifen 21) des Containers (2) vorhanden ist, die in einem festen Abstand gehalten werden.

7. Fahrzeugsystem nach einem der vorangehenden Ansprüche,
dadurch **gekennzeichnet,** daß der Anhänger (5) ein ausschiebbares Endteil (40) zur Aufnahme von Rücklichtern und Bremslichtern aufweist.

8. Fahrzeugsystem nach einem der vorangehenden Ansprüche,
dadurch **gekennzeichnet,** daß ein Achsgruppenrahmen (46) des Anhängers (5) zusammen mit einer Kupplungsscheibe (16) in Längsrichtung relativ zu einem Längsrahmen (42) verschiebbar ist.

9. Container (2), um zusammen mit einem Motorfahrzeug (4) und einem Anhänger (5) ein Fahrzeugsystem (1) nach einem der vorangehenden Ansprüche zu bilden,
dadurch **gekennzeichnet,** daß der Container (2) eine Länge von annähernd 16 m aufweist und mit zwei Kupplungselementen, z.B. Königszapfen (21) versehen ist, um zusammen mit den an einem Motorfahrzeug (4) bzw. einem Anhänger (5) vorgesehenen Kupplungselement, z.B. Kupplungsscheiben (16), zwei Kupplungen (17), z.B. Königszapfenkupplungen, zu bilden, die jeweils eingekuppelt und ausgekuppelt werden können durch Bewegen eines Motorfahrzeugs (4) bzw. eines Anhängers (5) relativ zu dem darüber angeordneten Container (2).

10. Fahrzeugsystem (1), um nach Vervollständigung ein Fahrzeugsystem nach einem der Ansprüche 1 bis 8 zu bilden, mit mindestens einem Motorfahrzeug (4) und einem damit mittels einer Zugstange gekoppelten Anhägers (5), wobei das Motorfahrzeug (4) und der Anhänger (5) jeweils zum Tragen eines lösbar damit verbindbaren kurzen Containers (36) ausgebildet sind, wobei das Fahrzeugsystem (1) ferner zum Tragen eines Langcontainers (2) ausgebildet ist, wenn ein Vorderteil des Langcontainers (2) lösbar und drehbar mit dem Motorfahrzeug (4) mittels einer ersten Kupplung (17) verbunden ist, die durch Bewegen des Motorfahrzeugs (4) relativ zu dem darüber befindlichen Container (2), wenn dieser auf seinen Beinen steht, ein- und ausgekuppelt werden können, wobei in diesem Fall ein hinterer Teil des Langcontainers (2) von dem Anhänger (5) abgestützt und mit einem Aufnahmeteil desselben verbunden ist;
wobei das Motorfahrzeug (4) mit dem Aufnahmeteil über Verbindungsmittel verbindbar ist, die erste Verbindungsmittel (16), die mit dem Aufnahmeteil verbunden sind, und zweite Verbindungsmittel (42), die mit dem Motorfahrzeug (4) gekoppelt sind, umfaßt;
wobei die ersten Verbindungsmittel (46) und die zweiten Verbindungsmittel (42) relativ zueinander bewegbar sind, um eine Fahrt des Fahrzeugsystems (1) durch eine Kurve zu kompensieren,
dadurch **gekennzeichnet,** daß der Aufnahmeteil eingerichtet ist zur Verbindung einer zweiten Kupplung (17) zum lösbaren und drehbaren Verbinden eines hinteren Teils des Langcontainers (2) mit dem Anhänger (5), wobei die zweite Kupplung (17) durch Bewegen des Anhängers (5) relativ zu dem darüber befindlichen Langcontainer (2), wenn dieser auf seinen Beinen steht, ein- und ausgekoppelt werden kann.

## Revendications

1. Système de véhicule (1) comprenant au moins un véhicule à moteur (4), une remorque (5) attelée au véhicule à moteur (4) au moyen d'une barre de remorquage et un long container (2) qui est supporté à la fois par le véhicule à moteur (4) et par la remorque (5), une partie avant dudit long container (2) étant reliée de manière amovible et rotative au véhicule à moteur (4) par un premier dispositif d'attelage (17), qui peut être amené en prise et dégagé en déplaçant le véhicule à moteur (4) par rapport au container (2) disposé au-dessus, lorsque ce dernier repose sur ses pieds (20), une partie arrière dudit long container (2) étant supportée par ladite remorque (5) et étant reliée à cette remorque, ledit véhicule à moteur (4) étant attelé à la partie arrière dudit long container (2) grâce à des moyens compensateurs comprenant un premier moyen compensateur (92, 46) relié audit long container (2) et un second moyen compensateur (8, 42) attelé audit véhicule à moteur (4), ledit premier moyen compensateur (92, 46) et ledit second moyen compensateur (8, 42) étant mobiles l'un par rapport à l'autre pour compenser le trajet du système de véhicule (1) dans un virage, caractérisé en ce que ledit long container (2) est équipé de pieds à sa partie avant et à sa partie arrière, et en ce que ledit container (2) est relié de manière amovible et rotative à la remorque (5) au moyen d'un second dispositif d'attelage (17), lequel second dispositif d'attelage (17) peut être amené en prise et dégagé en déplaçant la remorque (5) par rapport au container (2) disposé au-dessus, lorsque ce container repose sur ses pieds (20).

2. Système de véhicule (1) selon la revendication 1, caractérisé en ce que de chaque côté de son axe longitudinal le long container (2) repose sur des supports (29) du véhicule à moteur (4) et/ou de la remorque (5), lesquels supports (29) sont de préférence constitués par au moins un galet.

3. Système de véhicule (1) selon la revendication 2, caractérisé en ce que les supports (29) sont disposés sur des traverses (25) qui sont supportées par des étançons (26) par rapport aux châssis longitudinaux (19, 24) du véhicule à moteur (4) et de la remorque (5) respectivement.

4. Système de véhicule selon l'une quelconque des revendications précédentes, caractérisé en ce que le long container (2) a une longueur supérieure à 15 mètres et de préférence sensiblement égale à 16 mètres.

5. Système de véhicule selon l'une quelconque des revendications précédentes, caractérisé en ce que le container (2) est relié au véhicule à moteur (4) ainsi qu'à la remorque (5) au moyen d'un dispositif d'attelage à goupille (17).

6. Système de véhicule selon l'une quelconque des revendications précédentes, caractérisé par une capacité de déplacement relative des éléments du système de véhicule dans la direction axiale, par exemple des éléments (8 et 92) d'une barre télescopique de remorquage (9) pour compenser pendant le trajet en virage l'extension de la partie du système de véhicule se trouvant sous le container entre les éléments d'accrochage (goupilles 21) du container (2) qui sont maintenus à une distance fixe.

7. Système de véhicule selon l'une quelconque des revendications précédentes, caractérisé en ce que la remorque (5) comprend une pièce arrière (40) pouvant coulisser vers l'extérieur pour supporter des feux arrière et des feux de freinage.

8. Système de véhicule selon l'une quelconque des revendications précédentes, caractérisé en ce qu'un ensemble de bâti de fixation (46) de la remorque (5) peut coulisser en même temps qu'une coupelle d'attelage (16) dans une direction longitudinale par rapport à un bâti longitudinal (42).

9. Container (2) pour compléter, avec un véhicule à moteur (4) et une remorque (5), un système de véhicule (1) selon l'une quelconque des revendications précédentes, caractérisé en ce que le container (2) qui a une longueur d'environ 16 m est équipé de deux dispositifs d'attelage, par exemple de goupilles (21), pour constituer avec les éléments d'attelage, par exemple des coupelles d'attelage (16), disposées respectivement sur un véhicule à moteur (4) et sur une remorque (5), deux dispositifs d'attelage (17), par exemple des dispositifs d'attelage à goupilles, qui peuvent chacun être amenés en prise et dégagés en déplaçant un véhicule à moteur (4) et une remorque (5) respectivement par rapport au container (2) disposé au-dessus.

10. Système de véhicule (1) pour, après assemblage, constituer un système de véhicule selon l'une quelconque des revendications 1-8, comprenant au moins un véhicule à moteur (4) et une remorque (5) attelés ensemble au moyen d'une barre de remorquage, ledit véhicule à moteur (4) et ladite remorque (5) étant adaptés chacun pour supporter un container court (36) qui doit leur être relié de manière amovible, ledit système de véhicule (1) étant également conçu pour supporter un long container (2), lorsqu'une partie avant dudit long container (2) est reliée de manière amovible et rotative audit véhicule à moteur (4) au moyen d'un premier dispositif d'attelage (17) qui peut être amené en prise et dégagé en déplaçant ledit véhicule à moteur (4) par rapport audit container (2) disposé au-dessus, alors que ce dernier repose sur ses pieds, auquel cas une partie arrière dudit long container (2) est supportée par ladite remorque (5) et reliée à la partie de réception de cette remorque ;
ledit véhicule à moteur (4) pouvant être attelé à ladite partie de réception grâce à un moyen de liaison comprenant un premier moyen (46) relié à ladite partie de réception et un second moyen (42) relié audit véhicule à moteur (4) ;
ledit premier moyen relié (46) et ledit second moyen (42) étant mobiles l'un par rapport à l'autre pour compenser le trajet du système de véhicule (1) dans un virage, caractérisé en ce que ladite partie de réception est apte à relier un second dispositif d'attelage (17) pour relier de manière amovible et rotative une partie arrière dudit long container (2) à ladite remorque (5), lequel second dispositif d'attelage (17) peut être amené en prise et dégagé en déplaçant ladite remorque (5) par rapport audit long container (2) disposé au-dessus quand ce dernier repose sur ses pieds.
